# EUROPEAN PATENT SPECIFICATION

(11) **EP 3 666 509 B1**
(45) Date of publication and mention of the grant of the patent: **01.02.2023**
(21) Application number: 19213655.4
(22) Date of filing: 04.12.2019
(51) Int. Cl.: B29D 30/06, B29C 48/345, B29C 48/155, B29C 48/305

(54) **UNIT FOR THE SPIRAL APPLICATION OF A SEALANT FLUID INSIDE A TYRE**
EINHEIT ZUR SPIRALFÖRMIGEN ANBRINGUNG EINES FLÜSSIGEN DICHTMITTELS AUF DIE INNENSEITE EINES REIFENS
UNITÉ D'APPLICATION D'UNE MATIÈRE D'ÉTANCHÉIFICATION FLUIDE EN FORME DE SPIRALE SUR LA FACE INTÉRIEURE DU PNEU

(30) Priority: 11.12.2018 IT 201800010961
(43) Date of publication of application: 17.06.2020
(73) Proprietor: Bridgestone Europe NV/SA, 1932 Zaventem (BE)
(72) Inventor: Straffi, Paolo, 00128 Roma (IT); Sabella, Andrea, 00128 Roma (IT); Camosi, Luca, 00128 Roma (IT)
(74) Representative: Marchetti, Alessio

(56) References cited:
- EP-A2- 0 080 968
- EP-A2- 1 634 690
- WO-A1-2017/138265
- JP-A- 2004 230 592
- JP-A- 2005 111 826
- US-A1- 2017 305 210

## Description

### TECHNICAL SECTOR

The present invention relates to a unit for the spiral application of a sealing fluid on an inner surface of a pneumatic tyre.

### PRIOR ART

As is known, a pneumatic tyre comprises a toroidal carcass which has two annular beads and which supports an annular tread. A tread belt is interposed between the carcass and the tread which comprises a number of tread plies. The carcass supports a pair of sidewalls arranged between the tread and the beads. An innerliner is arranged inside the body ply which is airtight, constitutes an inner lining and has the function of retaining the air inside the pneumatic tyre in order to maintain the inflation pressure of the pneumatic tyre itself over time.

In recent years pneumatic tyre development has been directed towards pneumatic tyres with an inner lining that is manufactured with a sealing fluid that is intended to seal any punctures. Typically, the sealing fluid has a high viscosity in order to ensure both the sealing action in relation to any holes and the stability thereof within the inner cavity regardless of the conditions of the pneumatic tyre.

Generally speaking, the sealing fluid is applied to the inner surface of a pre-vulcanized pneumatic tyre and preferably in the area of the pneumatic tyre that comes into contact with the road (or the area of the pneumatic tyre wherein punctures can potentially occur). In particular, the sealing fluid is applied at the tread and partially at the sidewalls.

Typically, the procedure for the application of the sealing fluid includes arranging the already vulcanized pneumatic tyre on a rolling device suitable for making the tyre rotate about a central axis of rotation and along a rolling direction. In response to a command, a manipulation device moves an extrusion head (provided with a die suitable for delivering the sealing fluid with a predefined shape) so as to insert it in the inner cavity of the pneumatic tyre in a position directly facing the inner surface.

The manipulation device is conveniently implemented by means of a mobile arm (for example, an anthropomorphic or Cartesian robot) whereto is connected the die of the extrusion head provided with a nozzle which is intended for the application of a bead having a profile defined by the shape of the extrusion die of the sealing fluid on the inner surface of the pneumatic tyre.
The nozzle comprises a cavity, wherein the sealing fluid flows, and a single application aperture with an elongated shape, which permits the sealing fluid to flow out of the cavity.

In particular, the manipulation device is intended for the application of a bead of sealing fluid by means of an alternating movement (of the manipulation device and, therefore, of the die) between the two lateral ends of the inner surface of the pneumatic tyre, i.e., moving from one bead to the other of the pneumatic tyre itself. More particularly, the arm moves on a plane orthogonal to the equatorial plane of the pneumatic tyre.

The pneumatic tyre is brought into rotation by the rolling device by means of motorized rollers; the movement (continuous or stepped) of the arm and the rotation of the pneumatic tyre result in the application of the sealing agent. Advantageously in the case of a continuous movement of the arm, the application of the sealing agent follows a spiral progression made up of multiple parallel and axially offset passes.

In general, the sealing fluid is a very liquid, elastic and sticky compound; because of the elasticity thereof, it is particularly complex to apply it in a uniform manner insofar as, once it flows from the extrusion head, the sealing fluid tends to assume a form of minimum surface tension in an uncontrolled manner.

In particular, as soon as the sealing fluid flows from the single aperture of the die, the sealing fluid itself undergoes an elastic retraction that carries the extruded material back from the ends of the aperture toward the center of the aperture. In other words, the sides of the extrusion tend to retract and the section of the extruded sealing fluid tends to transform from a parallelogram or rectangle into an ellipsoid or oblong shape.

As a result, in order to avoid portions of the layer of sealing fluid inside the pneumatic tyre that are too thin (which would be created in the contact zone between two parallel passes) or having zones wherein the sealing fluid is not applied, it is necessary to create a partial overlap.

The overlap is generally equal to half of the width of the bead of sealing fluid applied between one pass of sealing fluid and the next or passing several times over the same zones of the inner surface before being certain that the layer of sealing fluid has at least a minimum predetermined thickness over the entire interior surface to be coated.

The prior art further involves the layer of sealing fluid inside the pneumatic tyre having, in transversal section, a pseudo-sinusoidal or in any case, periodic (i.e., with peaks and valleys due to the elastic retraction of the sealing fluid) progression with a maximum at the overlap between two successive passes and the resulting creation of extensive ridges, which make for a substantial waste of material.

US2017305210 discloses a pneumatic tyre with noise reduction properties. The pneumatic tyre includes a resonator attached to the inner periphery of the pneumatic tyre. The resonator comprises a tube with an aperture and a cavity connected to the tube.

EP0080968 discloses a continuous strip of sealing material for punctures, which strip is applied on an inner surface of a pneumatic tyre by means of the placement and adhesion of a plurality of adjacent turns of the strip with the various windings connected by angular crossing portions.

WO2017138265 discloses a layer of sealing material formed on an inner surface of a pneumatic tyre by a sealing agent in strips.

EP1634690 discloses an apparatus for producing at least two strips of rubber comprising an extruder for extruding the rubber composed of at least two strips of rubber.

### DESCRIPTION OF THE INVENTION

The object of the present invention is to provide a unit for the spiral application of a sealing fluid on an inner surface of a pneumatic tyre which is free of the existing drawbacks described above and, at the same time, is easy and economical to produce.

According to the present invention, a unit is provided for the spiral application of a sealing fluid on an inner surface of a pneumatic tyre according to that claimed within the appended claims.

### BRIEF DESCRIPTION OF THE DRAWINGS

The present invention is now described in reference to the attached drawings, wherein:
- figure 1 is a frontal and schematic sectional view of a unit for the spiral application of a sealing fluid on an inner surface of a pneumatic tyre produced according to the present invention;
- figure 2 is a frontal and schematic view of a die of an extrusion head of the unit for the spiral application of figure 1;
- figures 3 and 4 are two frontal and schematic views of other variants of the die of figure 2;
- figure 5 is a lateral and schematic view of a different embodiment of the die of figure 2; and
- figure 6 is a lateral and schematic view of a further embodiment of the die of figure 2.

### PREFERRED EMBODIMENTS OF THE INVENTION

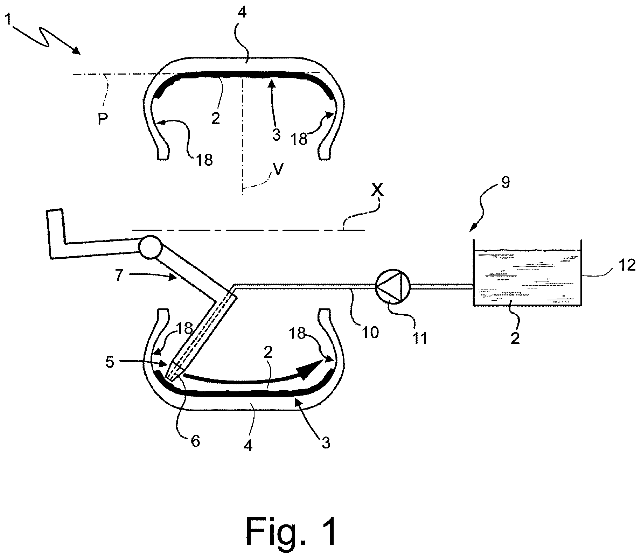

In figure 1, number 1 indicates, in the entirety thereof, a unit for spiral application, in particular by means of the extrusion, of a sealing fluid 2 on an inner surface 3 of a pneumatic tyre 4.

Advantageously, but not necessarily, the application unit 1 is part of a production line for run-flat pneumatic tyres.

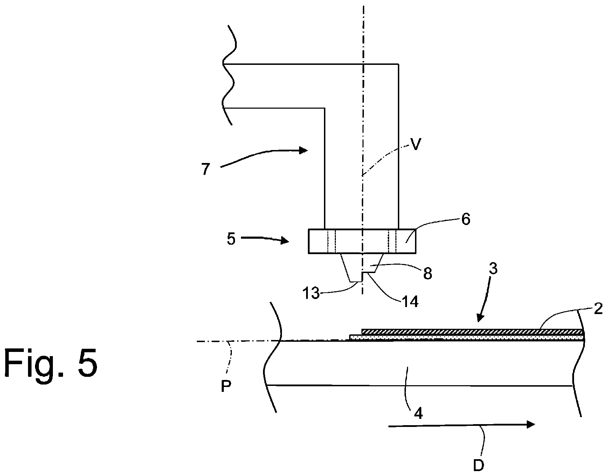

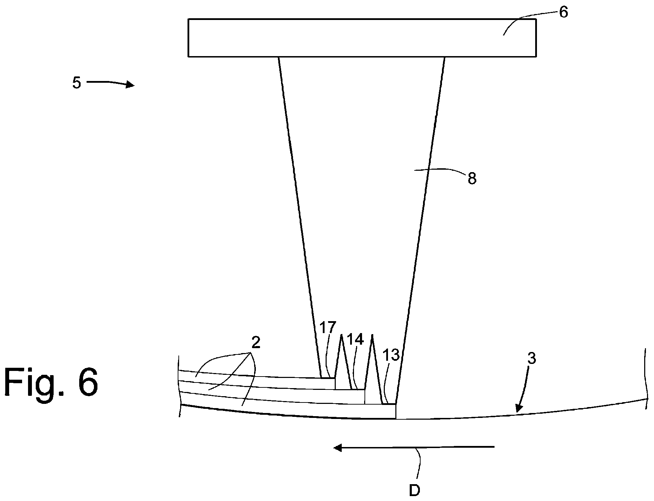

In the embodiment illustrated in figure 1, the application unit 1 comprises a rolling device (schematically illustrated with broken lines) which is suitable for making the pneumatic tyre 4 rotate about a central axis of rotation X and along a rolling direction D (illustrated in figures 5 and 6).

Application unit 1 further comprises an extrusion head 5 provided with a die 6 that is suitable for delivering the sealing fluid 2, and a manipulation device 7, in particular an anthropomorphic or Cartesian robot, which supports the extrusion head 5 and is suitable for arranging the extrusion head 5 inside the pneumatic tyre 4 and for moving the extrusion head 5.

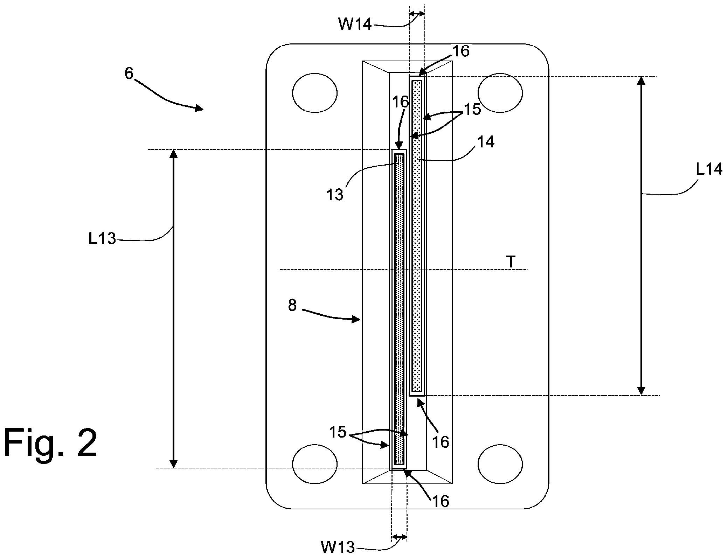

According to the illustration in figure 2, the die 6 defines a nozzle 8 and is provided internally with a cavity wherein the sealing fluid 2 flows.

According to the non-limiting embodiment illustrated in figure 1, the extrusion head 5 (provided with the die 6 and carried by the manipulation device 7) is connected to an extrusion system 9 comprising a conduit 10, a pump 11 and a tank 12 containing the sealing fluid 2. The manipulation device 7 is suitable for continuously moving the extrusion head 5 from one lateral wall 18 of the pneumatic tyre 4 to the other lateral wall 18 of the pneumatic tyre 4 along a plane orthogonal to the equatorial plane of the pneumatic tyre 4.

In particular, the sealing fluid 2 is a highly viscous polymeric mixture. More particularly, the sealing fluid 2 is a highly viscous and highly adhesive polymeric mixture suitable for closing any punctures that may be created in the tread.

According to the illustration in figure 2, the die 6 comprises a pair of application apertures 13 and 14 having an elongated shape that are separate and independent therebetween, parallel and adjacent therebetween. The application apertures 13 and 14 permit the (simultaneous) outflow of the sealing fluid 2 from the cavity of the die 6; in other words, the sealing fluid 2 flows (simultaneously) from the cavity of the die 6 by means of the two application apertures 13 and 14. In this way, the bead of sealing fluid 2 applied on the inner surface 3 is subdivided into two adjacent beads, the global disuniformity effect whereof, even if they themselves undergo an elastic retraction, is substantially reduced (cut by half). In fact, in the event the two orifices are offset at a distance equal to half of the application step, this disuniformity would have double the frequency resulting lower magnitude. As a result, it is possible, by increasing the number of application apertures 13 and 14 and, therefore, the number of beads (subdividing the single bead), to obtain a more uniform sealing fluid 2. The use of a single aperture would necessitate a greater number of revolutions in order to obtain the same number of passes and the completion of the inner surface 3 of the pneumatic tyre would require a longer period of time for the application thereof. In the case of a bead subdivided into two, this period of time would in fact be doubled.

According to the invention, each application aperture 13 or 14 has two larger sides 15 which define a length L13 or L14 of the application aperture 13 or 14 and two smaller sides 16 which define a width W13 or W14 of the application aperture 13 or 14.

According to the invention, the application apertures 13 and 14 are offset therebetween along a direction parallel to the smaller sides 16.

The term *"offset"* is intended to mean that the axes of symmetry (or rather the center lines) of the two application apertures 13 and 14 do not coincide (in other words, they are parallel to one another and arranged at a certain distance, not zero, one from the other).

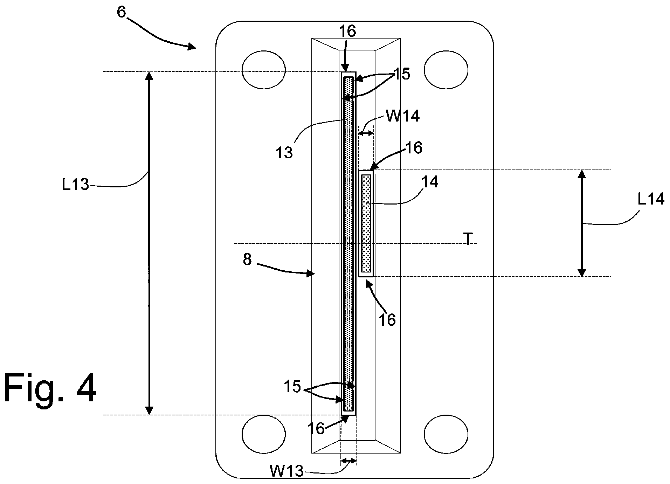

In several possible non-limiting embodiments (illustrated, for example, in figures 2 and 4), the two application apertures 13 and 14 are offset therebetween also along a direction parallel to the larger sides 15. This makes it is possible to apply more beads of sealing fluid 2 on the inner surface 3 in a same pass and with the desired overlap.

Advantageously, but not necessarily and as illustrated in the non-limiting embodiment of figure 2, the larger sides 15 of the application aperture 13 have the same length as the larger sides 15 of the application aperture 14 (in other words, the length L13 and the length L14 are equal). Furthermore, advantageously but not necessarily and as illustrated in the non-limiting embodiment of figure 2, the two application apertures 13 and 14 are offset therebetween along a direction parallel to the larger sides 15 over a quarter of the length L13 and L14 of the larger sides 15; in other words, as illustrated in figure 2, the two application apertures 13 and 14 face one another half of their length L13 and 14.

According to several possible non-limiting embodiments, the two application apertures 13 and 14 have a length L13 and L14 substantially equal to 25 mm and are offset with respect to a transversal axis of symmetry over a quarter of such length L13 and L14 along a direction parallel to the larger sides 15, that is, 6.25 mm.

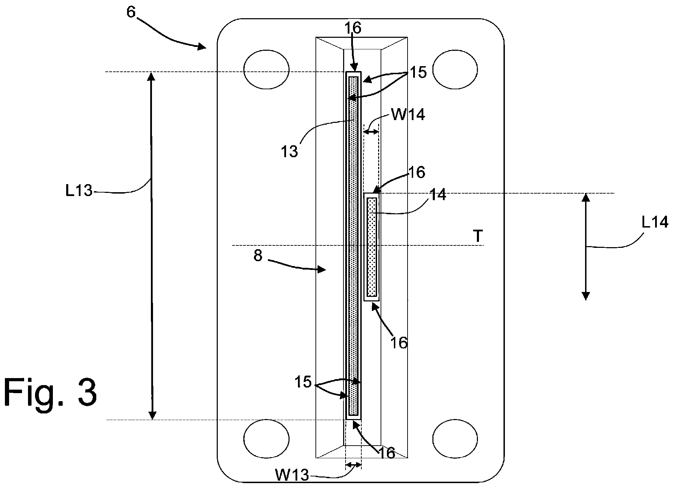

According to the non-limiting embodiments illustrated in figures 3 and 4, the larger sides 15 of the application aperture 13 are longer than the larger sides 15 of the application aperture 14; in other words, the length L13 is greater than the length L14.

Advantageously, but not necessarily, the larger sides 15 of the application aperture 13 are more than twice as long as the larger sides 15 of the application aperture 14; in other words, the length L13 is more than twice the length L14.

Advantageously, but not necessarily, the application aperture 14 has a length L14 substantially equal to one third the length L13 of the application aperture 13; in other words, the length L13 of the application aperture 13 is triple the length L14 of the application aperture 14. According to one possible embodiment, the length L14 could be equal to 8.33 mm.

By virtue of the increased instability of the sealing fluid 2, based on the composition of the sealing fluid 2 itself, it is possible to vary the position and the dimensions of the application apertures 13 and 14 in such a way that the sealing fluid 2 emitted by the application aperture 14 compensates as much as possible for the valleys caused by the elastic retraction of the sealing fluid 2 emitted from the application aperture 13 for the purpose of obtaining a uniform layer; for example, it is possible to maintain constant the dimensions of the application aperture 13 and to vary the position and the dimensions of the application aperture 14.

According to the non-limiting embodiment illustrated in figure 3, the two application apertures 13 and 14 are centered with respect to one another along a direction parallel to the larger sides 15; in other words, the transversal axes of symmetry thereof substantially coincide with one another and, in particular, with an axis T of symmetry of the nozzle 8.

According to the further and non-limiting embodiment illustrated in figure 4, the two application apertures 13 and 14 are offset with respect to one another also along a direction parallel to the larger sides 15; in other words, their transversal axes of symmetry do not coincide with one another, and, in particular, neither coincides with the axis T of symmetry of the nozzle 8.

According to several non-limiting embodiments, the larger sides 15 of the application aperture 13 are three times as long as the larger sides 15 of the application aperture 14 (in other words, the length L13 is substantially 3 times the length L14.

According to further non-limiting embodiments, the two application apertures 13 and 14 are offset therebetween also along a direction parallel to the larger sides 15 over a sixth of the length of the larger sides 15 of the first application aperture 13.

In several non-limiting and unillustrated embodiments, the two application apertures 13 and 14 have widths that differ therebetween. In other words, according to such embodiments the widths W13 and W14 are different therebetween. In other non-limiting and unillustrated cases, the width W13 or W14 of at least one application aperture 13 or 14 varies progressively along the extension of the application aperture 13 or 14 itself; in other words, the width W13 or W14 of at least one application aperture 13 or 14 is not constant along the extension of the application aperture 13 or 14 itself. In particular, the width W13 or W14 of at least one application aperture 13 or 14 can increase from the two ends of the application aperture 13 or 14 up to a maximum at the center of the application aperture 13 or 14 itself.

In further non-limiting and unillustrated cases, the width W13 or W14 of at least one application aperture 13 or 14 varies progressively. In particular, the width W13 or W14 of at least one application aperture 13 or 14 decreases from the two ends of the application aperture 13 or 14 down to a minimum at the center of the application aperture 13 or 14 itself. In such cases, the bead of sealing fluid 2 deposited on the inner surface 3 of the pneumatic tyre 4 has a sinusoidal section having some maximums corresponding to the ends of the application aperture 13 and some minimums corresponding to the transversal axis of symmetry of the application aperture 13. As a result, the application aperture 14 is appropriately placed for adding sealing fluid 2, which compensates for the valleys left by the sealing fluid 2 coming out of the application aperture 13.

Advantageously, but not necessarily and as illustrated in the non-limiting embodiment of figure 5, the application apertures 13 and 14 are offset therebetween along an axis V perpendicular to the inner surface 3 of the pneumatic tyre 4.

In particular, the application aperture 14 is arranged downstream from the first application aperture 13 along the rolling direction D of the pneumatic tyre 4 and is located at a greater distance from the inner surface 3 than the first application aperture 13. In this way, it is possible to apply the sealing fluid 2 on the inner surface 3 keeping the application apertures 13 and 14 at a minimum distance from the inner surface 3 itself (in other words, from the pneumatic tyre 4), especially in proximity to the overlap zone between the two beads of sealing fluid 2 deposited in a same pass from the extrusion head 5 (as illustrated in figure 5). In other words, in the case wherein the application apertures 13 and 14 are located in the same plane, they must be arranged at a distance from the inner surface 3 at least equal to the sum of the thicknesses of the two beads of sealing fluid 2 deposited in a same pass by the extrusion head 5. Instead, if the application aperture 13 is located at a shorter distance from the inner surface 3 than the application aperture 14, the latter must nevertheless be placed at a distance from the inner surface 3 at least equal to the sum of the thicknesses of the deposited beads of sealing fluid, while the application aperture 13 can be placed at a distance equal to the thickness of only the bead of sealing fluid 2 that flows from the application aperture 13 itself. This results in being unnecessary but advantageous insofar as during the extrusion the sealing fluid 2 rapidly enters into contact with the inner surface 3 of the pneumatic tyre 4 and, in attaching itself to said inner surface 3, undergoes an elastic retraction that is less significant than that which it would have if the distance between the application aperture 13 and the inner surface were greater.

Advantageously, but not necessarily and as illustrated in the non-limiting embodiment of figure 6, the die 6 comprises a third application aperture 17 with an elongated shape which is separate and independent from the application apertures 13 and 14, is parallel and adjacent to the application apertures 13 and 14, and permits the sealing fluid 2 to flow from the inner cavity of the nozzle 8 in addition to the application apertures 13 and 14.

That which has been described so far is obviously valid even in the case of three or more apertures.

In the embodiments illustrated in the attached figures, the application unit 1 described above is utilized for the application of a sealing fluid 2. According to other unillustrated embodiments, the unit 1 can be used in other types of machines for the production of pneumatic tyres 4 whereupon the interior or exterior whereof various fluids are applied or in different positions of the pneumatic tyres 4 themselves.

The embodiments described herein may be combined without departing from the scope of protection of the present invention.

The feed unit described above has many advantages.

In the first place, the application unit 1 described above allows for the application, in a controlled manner, of the sealing fluid inside a pneumatic tyre 4, generating a layer of sealing fluid 2 that is more uniform and less sinusoidal (therefore with peaks and valleys) than the techniques of the prior art.

Furthermore, specifically because of the leveling of the layer of sealing fluid 2 applied, the unit 1 makes it possible to utilize a lesser quantity of sealing fluid 2 nevertheless guaranteeing a minimum thickness of the layer of sealing fluid 2. As a result, the application unit 11 described above makes it possible to reduce the wasting of material and the environmental impact that results from the disposal of the worn-out pneumatic tyres.

Lastly, the application unit 11 described above, utilizing the possibility of simultaneously creating more passes of sealing fluid in a same cycle of the die 6 inside the pneumatic tyre 4 (ensuring the required overlap between two adjacent passes), makes it possible to consistently reduce the period of time required for the application of the sealing fluid 2 inside the pneumatic tyre 4.

### LIST OF REFERENCE NUMBERS IN THE FIGURES

- 1: application unit
- 2: sealing fluid
- 3: inner surface
- 4: pneumatic tyre
- 5: extrusion head
- 6: die
- 7: manipulation device
- 8: nozzle
- 9: extrusion system
- 10: conduit
- 11: valve
- 12: tank
- 13: application aperture
- 14: application aperture
- 15: larger sides
- 16: smaller sides
- 17: third aperture
- 18: sidewall
- X: central axis of rotation
- D: rolling direction
- L13: length
- L14: length
- W13: width
- W14: width
- T: transversal axis of symmetry
- V: axis

## Claims

1. Spiral application unit (1) of a sealing fluid (2) on an inner surface (3) of a pneumatic tyre (4); the application unit (1) comprises:
a rolling device suitable for making the pneumatic tyre (4) rotate about a central axis (X) of rotation and along a rolling direction (D);
an extrusion head (5) provided with a die (6) suitable for delivering the sealing fluid (2); and
a manipulation device (7) that supports the extrusion head (5) and is suitable for arranging the extrusion head (5) inside the pneumatic tyre (4) and for moving the extrusion head (5) itself;
wherein the die (6) comprises a cavity wherein the sealing fluid (2) flows and a first application aperture (13) with an elongated shape which permits the sealing fluid (2) to flow out of the cavity; and **characterized in that**
the die (6) comprises at least a second application aperture (14) with an elongated shape which is separate and independent from the first application aperture (13), is parallel and adjacent to the first application aperture (13), and permits the sealing fluid (2) to flow out of the cavity in addition to the first application aperture (13) ;
wherein each application aperture (13, 14) has two larger sides (15) which define a length (L13, L14) of the application aperture (13, 14) and two smaller sides (16) which define a width (W13, W14) of the application aperture (13, 14); and
the two application apertures (13, 14) are offset therebetween along a direction parallel to the smaller sides (16).

2. Application unit (1) according to claim 1, wherein the two application apertures (13, 14) are offset therebetween also along a direction parallel to the larger sides (15).

3. Application unit (1) according to claim 2, wherein:
the larger sides (15) of the first application aperture (13) have the same length as the larger sides (15) of the second application aperture (14); and
the two application apertures (13, 14) are offset therebetween along a direction parallel to the larger sides (15) over a quarter of the length (L13, L14) of the larger sides (15).

4. Application unit (1) according to claim 1 or 2, wherein the larger sides (15) of the first application aperture (13) are longer than the larger sides (15) of the second application aperture (14).

5. Application unit (1) according to claim 4, wherein the larger sides (15) of the first application aperture (13) are more than twice as long as the larger sides (15) of the second application aperture (14).

6. Application unit (1) according to claim 4 or 5, wherein the two application apertures (13, 14) are centered with respect to one another along a direction parallel to the larger sides (15).

7. Application unit (1) according to claim 4 or 5, wherein the two application apertures (13, 14) are offset therebetween also along a direction parallel to the larger sides (15).

8. Application unit (1) according to claim 7, wherein:
the larger sides (15) of the first application aperture (13) are three times longer the length of the larger sides (15) of the second application aperture (14); and
the two application apertures (13, 14) are offset therebetween also along a direction parallel to the larger sides (15) over a sixth of the length (L13, L14) of the larger sides (15) of the first application aperture (13).

9. Application unit (1) according to any one of claims 1 to 8, wherein the two application apertures (13, 14) have two different widths (W13, W14).

10. Application unit (1) according to any one of the claims from 1 to 9, wherein the width (W13, W14) of at least one application aperture (13, 14) varies progressively, in particular it increases from the two ends of the application aperture (13, 14) up to a maximum at the center of the application aperture (13, 14) itself.

11. Application unit (1) according to any one of the claims from 1 to 9, wherein the width (W13, W14) of at least one application aperture (13, 14) varies progressively, in particular decreases from the two ends of the application aperture (13, 14) down to a minimum at the center of the application aperture (13, 14) itself.

12. Application unit (1) according to any one of the claims from 1 to 11, wherein the application apertures (13, 14) are offset therebetween along an axis (V) perpendicular to the inner surface (3) of the pneumatic tyre (4).

13. Application unit (1) according to claim 12, wherein the second application aperture (14) is arranged downstream from the first application aperture (13) along the rolling direction (D) of the pneumatic tyre and is located at a greater distance from the inner surface (3) than the first application aperture (13).

14. Application unit (1) according to any one of claims 1 to 13, wherein the die (6) comprises a third application aperture (17) with an elongated shape which is separate and independent from the first and second application apertures (13, 14), is parallel and adjacent to the first and second application apertures (13, 14), and permits the sealing fluid (2) to flow from the cavity in addition to the first and second application apertures (13, 14).

15. Application unit (1) according to any one of the claims from 1 to 14, wherein the sealing fluid (2) is a mixture of rubber and polymers.

## Patentansprüche

1. Einheit (1) zur spiralförmigen Anbringung eines Dichtmittels (2) auf eine Innenfläche (3) eines Luftreifens (4); wobei die Anbringungseinheit (1) umfasst:
eine Rollvorrichtung, die dazu geeignet ist, zu bewirken, dass sich der Luftreifen (4) um eine Mittelachse (X) und entlang einer Rollrichtung (D) dreht;
einen Extrusionskopf (5), der mit einer Matrize (6) versehen und zum Zuführen des Dichtmittels (2) geeignet ist; und
eine Manipulationsvorrichtung (7), die den Extrusionskopf (5) trägt und geeignet ist, um den Extrusionskopf (5) innerhalb des Luftreifens (4) und zum Bewegen des Extrusionskopfs (5) selbst anzuordnen;
wobei die Matrize (6) einen Hohlraum, in dem das Dichtmittel (2) strömt, und eine erste Anbringungsöffnung (13) mit einer länglichen Form umfasst, die es dem Dichtmittel (2) ermöglicht, aus dem Hohlraum zu strömen; und eine Öffnung, **dadurch gekennzeichnet, dass** die Matrize (6) mindestens eine zweite Anbringungsöffnung (14) mit einer länglichen Form umfasst, die getrennt und unabhängig von der ersten Anbringungsöffnung (13) ist, parallel zur ersten Anbringungsöffnung (13) ist und daran angrenzt, und ermöglicht, dass das Dichtmittel (2) zusätzlich zur ersten Anbringungsöffnung (13) aus dem Hohlraum heraus strömt;
wobei jede Anbringungsöffnung (13, 14) zwei größere Seiten (15), die eine Länge (L13, 114) der Anbringungsöffnung (13, 14) definieren, und zwei kleinere Seiten (16) aufweist, die eine Breite (W13, w14) der Anbringungsöffnung (13, 14) definieren; und
die beiden Anbringungsöffnungen (13, 14) entlang einer Richtung parallel zu den kleineren Seiten (16) zueinander versetzt sind.

2. Anbringungseinheit (1) nach Anspruch 1, wobei die beiden Anbringungsöffnungen (13, 14) auch entlang einer Richtung parallel zu den größeren Seiten (15) versetzt sind.

3. Anbringungseinheit (1) nach Anspruch 2, wobei:
die größeren Seiten (15) der ersten Anbringungsöffnung (13) die gleiche Länge wie die größeren Seiten (15) der zweiten Anbringungsöffnung (14) aufweisen; und
die beiden Anbringungsöffnungen (13, 14) entlang einer Richtung parallel zu den größeren Seiten (15) über ein Viertel der Länge (L13, 114) der größeren Seiten (15) versetzt sind.

4. Anbringungseinheit (1) nach Anspruch 1 oder 2, wobei die größeren Seiten (15) der ersten Anbringungsöffnung (13) länger sind als die größeren Seiten (15) der zweiten Anbringungsöffnung (14).

5. Anbringungseinheit (1) nach Anspruch 4, wobei die größeren Seiten (15) der ersten Anbringungsöffnung (13) mehr als doppelt so lang sind wie die größeren Seiten (15) der zweiten Anbringungsöffnung (14).

6. Anbringungseinheit (1) nach Anspruch 4 oder 5, wobei die beiden Anbringungsöffnungen (13, 14) entlang einer Richtung parallel zu den größeren Seiten (15) zueinander zentriert sind.

7. Anbringungseinheit (1) nach Anspruch 4 oder 5, wobei die beiden Anbringungsöffnungen (13, 14) auch entlang einer Richtung parallel zu den größeren Seiten (15) versetzt sind.

8. Anbringungseinheit (1) nach Anspruch 7, wobei:
die größeren Seiten (15) der ersten Anbringungsöffnung (13) dreimal so lang wie die Länge der größeren Seiten (15) der zweiten Anbringungsöffnung (14) sind; und
die beiden Anbringungsöffnungen (13, 14) auch entlang einer Richtung parallel zu den größeren Seiten (15) über ein Sechstel der Länge (L13, L14) der größeren Seiten (15) der ersten Anbringungsöffnung (13) zueinander versetzt sind.

9. Anbringungseinheit (1) nach einem der Ansprüche 1 bis 8, wobei die beiden Anbringungsöffnungen (13, 14) zwei unterschiedliche Breiten (W13, W14) aufweisen.

10. Anbringungseinheit (1) nach einem der Ansprüche 1 bis 9, wobei die Breite (W13, W14) mindestens einer Anbringungsöffnung (13, 14) progressiv variiert, insbesondere von den beiden Enden der Anbringungsöffnung (13, 14) bis zu einem Maximum in der Mitte der Anbringungsöffnung (13, 14) selbst zunimmt.

11. Anbringungseinheit (1) nach einem der Ansprüche 1 bis 9, wobei die Breite (W13, W14) mindestens einer Anbringungsöffnung (13, 14) progressiv variiert, insbesondere von den zwei Enden der Anbringungsöffnung (13, 14) bis zu einem Minimum in der Mitte der Anbringungsöffnung (13, 14) selbst abnimmt.

12. Anbringungseinheit (1) nach einem der Ansprüche 1 bis 11, wobei die Anbringungsöffnungen (13, 14) entlang einer Achse (V) senkrecht zur Innenfläche (3) des Luftreifens (4) zueinander versetzt sind.

13. Anbringungseinheit (1) nach Anspruch 12, wobei die zweite Anbringungsöffnung (14) der ersten Anbringungsöffnung (13) entlang der Rollrichtung (D) des Luftreifens nachgelagert angeordnet ist und sich in einem größeren Abstand von der Innenfläche (3) als die erste Anbringungsöffnung (13) befindet.

14. Anbringungseinheit (1) nach einem der Ansprüche 1 bis 13, wobei die Matrize (6) eine dritte Anbringungsöffnung (17) mit einer länglichen Form umfasst, die getrennt und unabhängig von der ersten und der zweiten Anbringungsöffnung (13, 14) ist, parallel zu der ersten und der zweiten Anbringungsöffnung (13, 14) ist und daran angrenzt, und ermöglicht, dass das Dichtmittel (2) zusätzlich zu der ersten und zweiten Anbringungsöffnung (13, 14) aus dem Hohlraum strömt.

15. Anbringungseinheit (1) nach einem der Ansprüche 1 bis 14, wobei das Dichtmittel (2) eine Mischung aus Kautschuk und Polymeren ist.

## Revendications

1. Unité d'application en spirale (1) d'un fluide d'étanchéité (2) sur une surface intérieure (3) d'un pneumatique (4) ; l'unité d'application (1) comprend :
un dispositif de roulement approprié pour faire tourner le pneumatique (4) autour d'un axe central (X) de rotation et le long d'une direction de roulement (D) ;
une tête d'extrusion (5) dotée d'une filière (6) appropriée pour distribuer le fluide d'étanchéité (2) ; et
un dispositif de manipulation (7) qui supporte la tête d'extrusion (5) et est approprié pour agencer la tête d'extrusion (5) à l'intérieur du pneumatique (4) et pour déplacer la tête d'extrusion (5) elle-même ;
dans lequel la filière (6) comprend une cavité dans laquelle le fluide d'étanchéité (2) s'écoule et un premier orifice d'application (13) avec une forme allongée qui permet au fluide d'étanchéité (2) de s'écouler hors de la cavité ; et **caractérisée en ce que** la filière (6) comprend au moins un deuxième orifice d'application (14) avec une forme allongée qui est séparé et indépendant du premier orifice d'application (13), est parallèle et adjacent au premier orifice d'application (13), et permet au fluide d'étanchéité (2) de s'écouler hors de la cavité en plus du premier orifice d'application (13) ;
dans lequel chaque orifice d'application (13, 14) a deux côtés plus grands (15) qui définissent une longueur (L13, L14) de l'orifice d'application (13, 14) et deux côtés plus petits (16) qui définissent une largeur (W13, W14) de l'orifice d'application (13, 14) ; et
les deux orifices d'application (13, 14) sont décalés entre eux le long d'une direction parallèle aux côtés plus petits (16).

2. Unité d'application (1) selon la revendication 1, dans laquelle les deux orifices d'application (13, 14) sont décalés entre eux également le long d'une direction parallèle aux côtés plus grands (15).

3. Unité d'application (1) selon la revendication 2, dans laquelle :
les côtés plus grands (15) du premier orifice d'application (13) ont la même longueur que les côtés plus grands (15) du deuxième orifice d'application (14) ; et
les deux orifices d'application (13, 14) sont décalés entre eux le long d'une direction parallèle aux côtés plus grands (15) sur un quart de la longueur (L13, L14) des côtés plus grands (15).

4. Unité d'application (1) selon la revendication 1 ou 2, dans laquelle les côtés plus grands (15) du premier orifice d'application (13) sont plus longs que les côtés plus grands (15) du deuxième orifice d'application (14).

5. Unité d'application (1) selon la revendication 4, dans laquelle les côtés plus grands (15) du premier orifice d'application (13) sont plus de deux fois plus longs que les côtés plus grands (15) du deuxième orifice d'application (14).

6. Unité d'application (1) selon la revendication 4 ou 5, dans laquelle les deux orifices d'application (13, 14) sont centrés l'un par rapport à l'autre le long d'une direction parallèle aux côtés plus grands (15).

7. Unité d'application (1) selon la revendication 4 ou 5, dans laquelle les deux orifices d'application (13, 14) sont décalés entre eux également le long d'une direction parallèle aux côtés plus grands (15).

8. Unité d'application (1) selon la revendication 7, dans laquelle :
les côtés plus grands (15) du premier orifice d'application (13) sont trois fois plus longs que la longueur des côtés plus grands (15) du deuxième orifice d'application (14) ; et
les deux orifices d'application (13, 14) sont décalés entre eux également le long d'une direction parallèle aux côtés plus grands (15) sur un sixième de la longueur (L13, L14) des côtés plus grands (15) du premier orifice d'application (13).

9. Unité d'application (1) selon l'une quelconque des revendications 1 à 8, dans laquelle les deux orifices d'application (13, 14) ont deux largeurs différentes (W13, W14).

10. Unité d'application (1) selon l'une quelconque des revendications 1 à 9, dans laquelle la largeur (W13, W14) d'au moins un orifice d'application (13, 14) varie progressivement, en particulier elle augmente des deux extrémités de l'orifice d'application (13, 14) jusqu'à un maximum au centre de l'orifice d'application (13, 14) lui-même.

11. Unité d'application (1) selon l'une quelconque des revendications 1 à 9, dans laquelle la largeur (W13, W14) d'au moins un orifice d'application (13, 14) varie progressivement, en particulier diminue des deux extrémités de l'orifice d'application (13, 14) jusqu'à un minimum au centre de l'orifice d'application (13, 14) lui-même.

12. Unité d'application (1) selon l'une quelconque des revendications 1 à 11, dans laquelle les orifices d'application (13, 14) sont décalés entre eux le long d'un axe (V) perpendiculaire à la surface intérieure (3) du pneumatique (4).

13. Unité d'application (1) selon la revendication 12, dans laquelle le deuxième orifice d'application (14) est agencé en aval du premier orifice d'application (13) le long de la direction de roulement (D) du pneumatique et est situé à une plus grande distance de la surface intérieure (3) que le premier orifice d'application (13).

14. Unité d'application (1) selon l'une quelconque des revendications 1 à 13, dans laquelle la filière (6) comprend un troisième orifice d'application (17) avec une forme allongée qui est distinct et indépendant des premier et deuxième orifices d'application (13, 14), est parallèle et adjacent aux premier et deuxième orifices d'application (13, 14), et permet au fluide d'étanchéité (2) de s'écouler de la cavité en plus des premier et deuxième orifices d'application (13, 14).

15. Unité d'application (1) selon l'une quelconque des revendications 1 à 14, dans laquelle le fluide d'étanchéité (2) est un mélange de caoutchouc et de polymères.
